# EUROPEAN PATENT SPECIFICATION

(11) **EP 3 450 875 B1**
(45) Date of publication and mention of the grant of the patent: **02.06.2021**
(21) Application number: 17789353.4
(22) Date of filing: 18.04.2017
(51) Int. Cl.: F24H 4/02, F25B 30/02, F24D 11/02, F24D 17/02, F24H 4/04, F24H 9/20

(54) **HOT-WATER SUPPLY SYSTEM**
HEISSWASSERVERSORGUNGSSYSTEM
SYSTÈME D'ALIMENTATION EN EAU CHAUDE

(30) Priority: 28.04.2016 JP 2016091962
(43) Date of publication of application: 06.03.2019
(73) Proprietor: Daikin Industries, Ltd., Osaka-shi, Osaka 530-8323 (JP); Rinnai Corporation, Nagoya-shi, Aichi 454-0802 (JP)
(72) Inventor: NISHIDA, Teruo, Osaka-Shi Osaka 530-8323 (JP); MATSUSAKA, Yukio, Osaka-Shi Osaka 530-8323 (JP); KONO, Hideo, Nagoya-shi Aichi 454-0802 (JP); NAGATA, Hidenori, Nagoya-shi Aichi 454-0802 (JP)
(74) Representative: Hoffmann Eitle
(86) International application number: PCT/JP2017/015606
(87) International publication number: WO 2017/188068

(56) References cited:
- WO-A1-2011/129248
- WO-A1-2011/129248
- WO-A1-2012/102185
- JP-A- 2001 041 574
- JP-A- 2005 201 538
- JP-A- 2008 202 934
- JP-A- 2008 202 934
- JP-A- 2009 275 958
- JP-A- 2009 275 958
- JP-A- 2012 225 587
- JP-A- 2012 225 587
- JP-U- S57 144 325
- JP-U- S57 144 325

## Description

### [Technical Field]

The present invention relates to a hot water supply system including a heat pump type heating unit configured to be able to supply hot water to a hot water tank.

### [Background Art]

A hot water supply system includes: a hot water tank storing hot water; a heat pump type water heater which is able to supply hot water to the hot water tank; and a gas water heater which is able to heat hot water supplied from the hot water tank to a hot water supply terminal. In the hot water supply system, when hot water is not supplied, heating operation is performed only by the heat pump type water heater. On the other hand, when hot water in the hot water tank has run out while the hot water is discharged from the hot water supply terminal, heating operation is performed by both of the heat pump type water heater and the gas water heater at the same time.

Further, PTL 2 describes relates to a hybrid hot water supplier capable of reducing the frequency of the operating state and the stopping state of a heat pump device when radiating the heat to a heat radiator.

Finally, PTL 3 describes a controller for water heater system, program for controlling water heater system, and method for operating water heater system which can prevent an increase in the risk of running out of hot water while providing an improved average COP (Coefficient of Performance) during a boiling period.

### [Citation List]

### [Patent Literature]

[Patent Literature 1] Japanese Unexamined Patent Publication No. 2013-113495
[Patent Literature 2] JP 2012 225 587 A
[Patent Literature 3] WO 2011/129248 A1

### [Summary of Invention]

### [Technical Problem]

The heat pump type water heater is typically driven with a heating capability (frequency) at which heat pump efficiency (COP) is maximized, in accordance with the outside temperature. In the same way, when heating operation is performed only by the heat pump type water heater and when heating operation is performed by both of the heat pump type water heater and the gas water heater at the same time, the heat pump type water heater is driven with the heating capability (frequency) at which COP is maximized. In these cases, when the hot water in the hot water tank has run out, overall energy efficiency of the system including the heat pump type water heater and the gas water heater may not be optimal.

An object of the present invention is to provide a hot water supply system in which, for example, when hot water in a hot water tank has run out, overall energy efficiency of the system including a heat pump type water heater and a gas water heater is optimized.

### [Solution to Problem]

The hot water supply system according to the first aspect of the invention comprises: a hot water tank which stores hot water; a heat pump type heating unit configured to be able to supply the hot water to the hot water tank; and an auxiliary heating unit configured to be able to heat the hot water supplied from the hot water tank to a hot water supply terminal, and the hot water supply system is configured to perform:
a heat pump single operation in which the heat pump type heating unit is driven but the auxiliary heating unit is not driven; and an auxiliary heating operation in which the heat pump type heating unit and the auxiliary heating unit are driven at the same time, and a controlling unit configured to perform the following steps:
when outside temperature in the auxiliary heating operation is the same as outside temperature in the heat pump single operation, a frequency of a compressor of the heat pump type heating unit in the auxiliary heating operation is higher than a frequency of the compressor of the heat pump type heating unit in the heat pump single operation, and heat pump efficiency of the heat pump type heating unit in the auxiliary heating operation is lower than heat pump efficiency of the heat pump type heating unit in the heat pump single operation.

In the hot water supply system, when heating operation, in which the heat pump type heating unit and the auxiliary heating unit are driven at the same time, is performed in cases such as running out of hot water in the hot water tank, the system is driven with the lower heat pump efficiency of the heat pump type heating unit and the higher frequency of the compressor, with the result that the heating capability of the heat pump type heating unit is increased. As a result, the heating ratio of the heat pump type heating unit in the whole hot water supply system is increased, and overall energy efficiency of the hot water supply system including the heat pump type heating unit and the auxiliary heating unit is optimized.

The hot water supply system according to the second aspect of the invention, in the first aspect, is configured such that the auxiliary heating operation is performed when an amount of the hot water stored in the hot water tank is smaller than a predetermined amount while the hot water is discharged from the hot water supply terminal.

In the hot water supply system, the auxiliary heating operation is performed when the amount of the hot water stored in the hot water tank is smaller than a predetermined amount as a result of discharge of the hot water from the hot water supply terminal. Therefore, even if the amount of the hot water stored in the hot water tank becomes little, the hot water from the hot water supply terminal can be discharged continuously.

The hot water supply system according to the third aspect of the invention is configured such that the heating capability of the heat pump type heating unit in the auxiliary heating operation is determined such that the heating capability of the heat pump type heating unit is higher than heating capability of the heat pump type heating unit at which COP is maximized at outside temperature when the auxiliary heating operation is performed and primary energy efficiency of the heat pump type heating unit is equal to or higher than primary energy efficiency of the auxiliary heating unit.

This hot water supply system is configured such that the heating capability of the heat pump type heating unit is determined such that it is higher than heating capability of the heat pump type heating unit at which the COP is maximized, and the primary energy efficiency of the heat pump type heating unit is equal to or higher than the primary energy efficiency of the auxiliary heating unit. This arrangement prevents the primary energy efficiency of the heat pump type heating unit from being lower than the primary energy efficiency of the auxiliary heating unit, with the result that the reduction in energy efficiency of the whole hot water supply system can be prevented.

### [Advantageous Effects of Invention]

As described above, the present invention brings about the following advantageous effects.

According to the first aspect of the invention, when heating operation, in which the heat pump type heating unit and the auxiliary heating unit are driven at the same time, is performed in cases such as running out of hot water in the hot water tank, the system is driven with the lower heat pump efficiency of the heat pump type heating unit and the higher frequency of the compressor, with the result that the heating capability of the heat pump type heating unit is increased. As a result, the heating ratio of the heat pump type heating unit in the whole hot water supply system is increased, and overall energy efficiency of the system including the heat pump type heating unit and the gas water heater is optimized.

According to the second aspect of the invention, the auxiliary heating operation is performed when the amount of the hot water stored in the hot water tank is smaller than a predetermined amount as a result of discharge of the hot water from the hot water supply terminal. Therefore, even if the amount of the hot water stored in the hot water tank becomes little, the hot water from the hot water supply terminal can be discharged continuously.

According to the third aspect of the invention, the heating capability of the heat pump type heating unit is determined such that it is higher than heating capability of the heat pump type heating unit at which the COP is maximized, and the primary energy efficiency of the heat pump type heating unit is equal to or higher than the primary energy efficiency of the auxiliary heating unit. This arrangement prevents the primary energy efficiency of the heat pump type heating unit from being lower than the primary energy efficiency of the auxiliary heating unit, with the result that the reduction in energy efficiency of the whole hot water supply system can be prevented.

### [Brief Description of Drawings]

[FIG. 1] FIG. 1 is a schematic structure diagram showing a hot water supply system of an embodiment of the present invention.
[FIG. 2] FIG. 2 is a diagram showing a structure of a controlling unit of the hot water supply system shown in FIG. 1.
[FIG. 3] FIG. 3 is a diagram showing variation of COP when a heating capability of a heat pump unit changes.
[FIG. 4] FIG. 4 is a diagram showing variation of primary energy efficiency when a heating capability of a heat pump unit changes.
[FIG. 5] FIG. 5 is a flow chart showing operation of the hot water supply system shown in FIG. 1.

### [Description of Embodiments]

The following will describe embodiments of the present invention, with reference to the drawings.

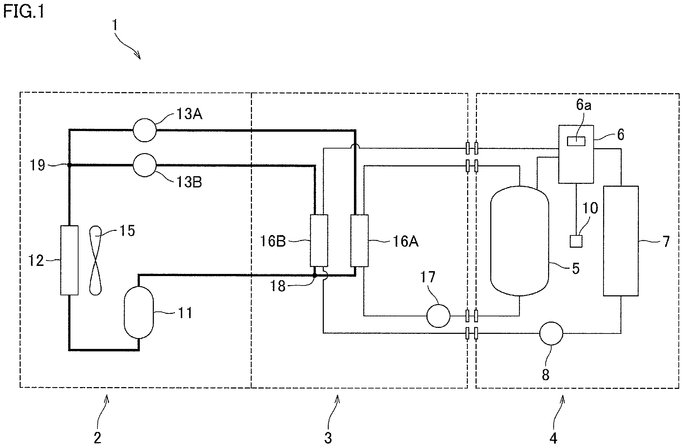

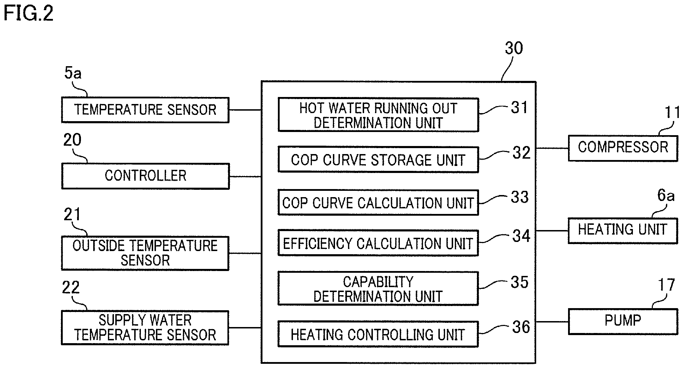

FIG. 1 is a schematic structure diagram showing a hot water supply system of an embodiment of the present invention. A hot water supply system 1 includes a heat pump unit 2 and a water unit 3. The heat pump unit 2 includes a compressor 11, an outdoor heat exchanger 12, an expansion valve 13, a hot water supply heat exchanger 16, a fan 15, a refrigerant pipe 40, and a controller 20 (see FIG. 2) . The controller 20 is provided both in the heat pump unit 2 and in the water unit 3.

In the heat pump unit 2, a refrigerant circuit 41 is arranged. In the circuit, a refrigerant is circulated in a refrigerant pipe 40 which connects the compressor 11, the outdoor heat exchanger 12, the expansion valve 13, and the hot water supply heat exchanger 16. In the refrigerant circuit 41, a refrigerant inflow port of the hot water supply heat exchanger 16 is connected to a discharging port of the compressor 11, and one end of the outdoor heat exchanger 12 is connected to a sucking port of the compressor 11. The other end of the outdoor heat exchanger 12 is connected to one end of the expansion valve 13, and the other end of the expansion valve 13 is connected to a refrigerant outflow port of the hot water supply heat exchanger 16. The fan 15 is disposed so as to be opposed to the outdoor heat exchanger 12.

In heating operation of the hot water supply system 1, as indicated by arrows in FIG. 1, a heating cycle (normal cycle) is formed as follows: a refrigerant discharged from the compressor 11 flows, from the hot water supply heat exchanger 16, through the expansion valve 13, to the outdoor heat exchanger 12 in order; and the refrigerant having passed through the outdoor heat exchanger 12 returns back to the compressor 11. That is, the hot water supply heat exchanger 16 functions as a condenser, and the outdoor heat exchanger 12 functions as an evaporator. In the heating operation, a refrigerant having flown in from the discharging port of the compressor 11 exchanges heat with hot-water-supply hot water in the hot water supply heat exchanger 16, with the result that the hot-water-supply hot water is heated.

The water unit 3 includes a pump 17, a hot water supply tank 5, a gas water heater 6, a hot water supply terminal 10, water pipes 45 and 46, a supply water temperature sensor 22, and the controller 20. In the water unit 3, a hot water circuit 48 is arranged. In the circuit, hot water is circulated in the water pipe 45 which connects the pump 17 with the hot water supply heat exchanger 16. In the hot water circuit 48, a discharging port of the pump 17 is connected to a hot inflow port of the hot water supply heat exchanger 16, and a sucking port of the pump 17 is connected to one end of the hot water supply tank 5. A hot water outflow port of the hot water supply heat exchanger 16 is connected to the other end of the hot water supply tank 5.

In the hot water circuit 48, hot water, which exchanges heat with a refrigerant flowing in the hot water supply heat exchanger 16, is circulated. Specifically, when the heating operation is performed, hot-water-supply hot water discharged from the hot water supply tank 5 by the pump 17 is supplied to the hot water supply heat exchanger 16, and the hot water heated by the hot water supply heat exchanger 16 is returned to the hot water supply tank 5. The gas water heater 6, which is connected to the hot water supply tank 5 via the water pipe 46, includes a heater 6a, and is connected to a hot water supply terminal 10. Therefore, in the gas water heater 6, hot-water-supply hot water supplied from the hot water supply tank 5 can be heated before the hot-water-supply hot water is supplied to the hot water supply terminal 10. With the hot water supply terminal 10, users can use hot water in the hot water supply tank 5.

An outside temperature sensor 21 detects outside temperature, and outputs the temperature to a controlling unit 30. The supply water temperature sensor 22 is disposed in the vicinity of the hot water outflow port of the hot water supply heat exchanger 16, detects temperature of hot water discharged from the hot water supply heat exchanger 16, and outputs the temperature to the controlling unit 30. Note that the outside temperature sensor 21 and the supply water temperature sensor 22 may be differently structured on condition that the detected temperature can be output to the controlling unit 30.

As described above, the hot water supply system 1 includes the heat pump unit 2 (heat pump type heating unit) which is configured to be able to supply hot water to the hot water tank 5, and the gas water heater 6 (auxiliary heating unit) which is configured to be able to heat hot water which will be supplied to the hot water supply terminal 10. Here, in the hot water supply system 1, heating operation, in which the hot water in the hot water tank 5 or the hot water which is to be supplied to the hot water supply terminal 10 is heated, can be performed, and as the heating operation, the following operations can be performed: heat pump single operation in which the heat pump unit 2 is driven but the auxiliary heating unit is not driven; and auxiliary heating operation in which the heat pump unit 2 and the gas water heater 6 are driven at the same time.

As shown in FIG. 2, the controlling unit 30 of the hot water supply system includes: a hot water running out determination unit 31; a COP curve storage unit 32; a COP curve calculation unit 33; an efficiency calculation unit 34; a capability determination unit 35; and a heating controlling unit 36. An input end of the controlling unit 30 is connected to a temperature sensor 5a which is attached to an upper part of the side face of the hot water supply tank 5, the controller 20, the outside temperature sensor 21, and the supply water temperature sensor 22. An output end of the controlling unit 30 is connected to the compressor 11, the heating unit 6a, and the pump 17.

The hot water running out determination unit 31 determines if the amount of hot water stored in the hot water supply tank 5 is decreased (ratio of the hot water in the hot water supply tank 5 is decreased) and the hot water has run out or not (i.e., determines if the heating operation needs to be performed or not). In the present embodiment, the hot water running out determination unit 31 determines that the heating operation needs to be performed, when detected temperature by the temperature sensor 5a attached to the upper part of the side face of the hot water supply tank 5 is lower than a stored hot water target temperature by at least a predetermined temperature, for the reason that the ratio of the hot water in the hot water supply tank 5 is decreased and the hot water has run out. A supply water target temperature is input by a user by operating the controller 20.

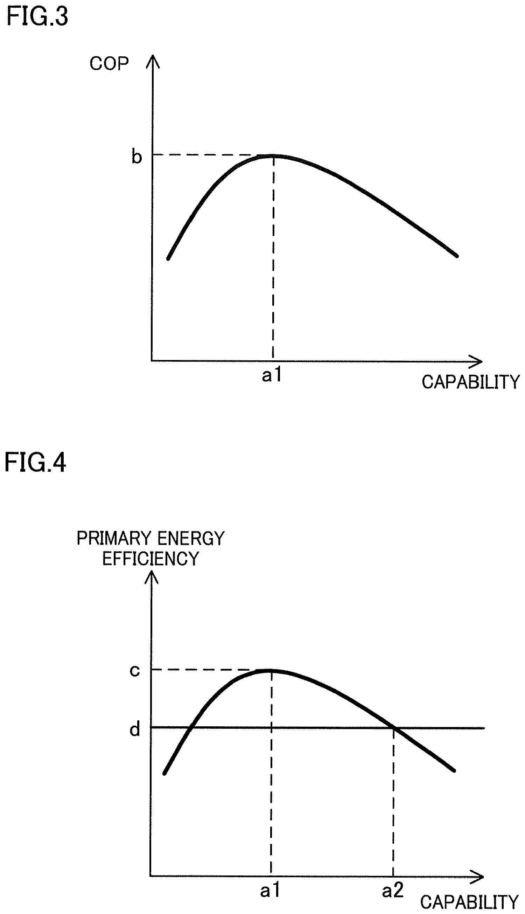

The COP curve storage unit 32 stores plural COP curves, and each of the plural COP curves corresponds to various outside temperatures and supply water target temperatures. A COP curve is plotted as shown in FIG. 3 with its horizontal axis as heating capability (frequency of a compressor) and its vertical axis as COP. A point on the curve indicates a heating capability of the heat pump unit 2 and a COP at the heating capability. As shown in FIG. 3, the COP of the heat pump unit 2 is at the maximum value b when the heating capability is at a1.

The COP curve calculation unit 33 calculates a COP curve based on the outside temperature and the supply water target temperature at the time when hot water starts to be supplied and then the hot water running out determination unit 31 determines that the heating operation needs to be performed. In the present embodiment, because the COP curve storage unit 32 stores plural COP curves, the COP curve calculation unit 33 acquires the COP curve based on the outside temperature and the supply water target temperature at a given time from COP curves stored in the COP curve storage unit 32. The outside temperature is a temperature detected by the outside temperature sensor 21, and the supply water target temperature is a temperature input by the controller 20.

The efficiency calculation unit 34 calculates primary energy efficiency of the heat pump unit 2 based on the COP curve acquired by the COP curve calculation unit 33. In the present embodiment, the efficiency calculation unit 34 calculates primary energy efficiency by applying a primary energy conversion factor 0.369 to each COP curve. In this way, a primary energy efficiency curve calculated based on the COP curve is plotted as shown in FIG. 4 with its horizontal axis as heating capability (frequency of a compressor) and its vertical axis as primary energy efficiency. A point on the curve indicates a heating capability of the heat pump unit 2 and a primary energy efficiency at the heating capability. As shown in FIG. 4, the primary energy efficiency curve calculated based on the COP curve is at the maximum value c when the heating capability is at a1. In FIG. 4, primary energy efficiency of the gas water heater 6 is illustrated as "d".

The capability determination unit 35 determines a heating capability of the heat pump type water heater 2 as a1 which is the heating capability at which the COP is maximized in the COP curve in FIG. 3, in the heat pump single operation in which the heat pump unit 2 is driven but the auxiliary heating unit is not driven.

On the other hand, the capability determination unit 35 determines a heating capability of the heat pump unit 2 such that the primary energy efficiency of the heat pump unit 2 is the same as the primary energy efficiency of the gas water heater 6, in the auxiliary heating operation in which the heat pump unit 2 and the gas water heater 6 are driven at the same time. Thus, the capability determination unit 35, as shown in FIG. 4, determines the heating capability of the heat pump unit 2 as a2 such that the primary energy efficiency of the heat pump unit 2 is the same as the primary energy efficiency d of the gas water heater 6 based on a primary energy efficiency curve calculated based on the COP curve.

In this way, when outside temperature in the auxiliary heating operation is the same as outside temperature in the heat pump single operation, the capability determination unit 35 determines the heating capability of the heat pump unit 2 as a1 in the heat pump single operation in which the heat pump unit 2 is driven but the auxiliary heating unit is not driven, whilst the capability determination unit 35 determines the heating capability of the heat pump unit 2 as a2 in the auxiliary heating operation in which the heat pump unit 2 and the gas water heater 6 are driven at the same time. That is, the capability determination unit 35 determines the heating capability of the heat pump unit 2 such that the frequency of the compressor of the heat pump unit 2 in the auxiliary heating operation is higher than the frequency of the compressor of the heat pump unit 2 in the heat pump single operation and the heat pump efficiency of the heat pump unit 2 in the auxiliary heating operation is higher than the heat pump efficiency of the heat pump unit 2 in the heat pump single operation.

Furthermore, after the capability determination unit 35 determined the heating capability of the heat pump unit 2 in the auxiliary heating operation as described above, the capability determination unit 35 determines the heating capability of the gas water heater 6 as the heating capability of the heating operation based on to what extent the heating capability of the heat pump unit 2 is insufficient.

The heating controlling unit 36 controls the frequency of the compressor 11 and number of rotations of the pump 17, in the heat pump single operation and in the auxiliary heating operation. Specifically, the heating controlling unit 36 performs the heating operation by controlling the frequency of the compressor 11 based on the heating capability of the heat pump unit 2 determined by the capability determination unit 35, and controlling the heating unit 6a of the gas water heater 6 based on the heating capability of the gas water heater 6 determined by the capability determination unit 35. Furthermore, the heating controlling unit 36 keeps the frequency of the compressor 11 constant, and controls the number of rotations of the pump 17 so as to achieve the supply water target temperature.

As described above, in the heat pump single operation, the capability determination unit 35 determines the heating capability of the heat pump type water heater 2 as a1 at which the COP is at the maximum value. Based on the heating capability a1, the frequency of the compressor 11 is controlled until supply water temperature detected by the supply water temperature sensor 22 becomes equal to the supply water target temperature.

As described above, in the auxiliary heating operation, the capability determination unit 35 determines the heating capability of the heat pump unit 2 as a2. Based on the heating capability a2, the frequency of the compressor 11 is controlled until supply water temperature detected by the supply water temperature sensor 22 achieves the supply water target temperature. After the supply water temperature detected by the supply water temperature sensor 22 has reached supply water target temperature, the compressor 11 is controlled with a higher frequency (frequency based on the heating capability a2) than the frequency in the heat pump single operation (frequency based on the heating capability a1), and the pump 17 is controlled with larger number of rotations than the number of rotations of the pump 17 in the heat pump single operation. In this way, because the pump 17 is driven with the large number of rotations in the auxiliary heating operation, flow amount of hot water circulating in the water unit 3 is increased. As a result, while the supply water temperature can be kept constant, the amount of the hot water stored in the hot water supply tank 5 per unit time can be increased compared with in the heat pump single operation.

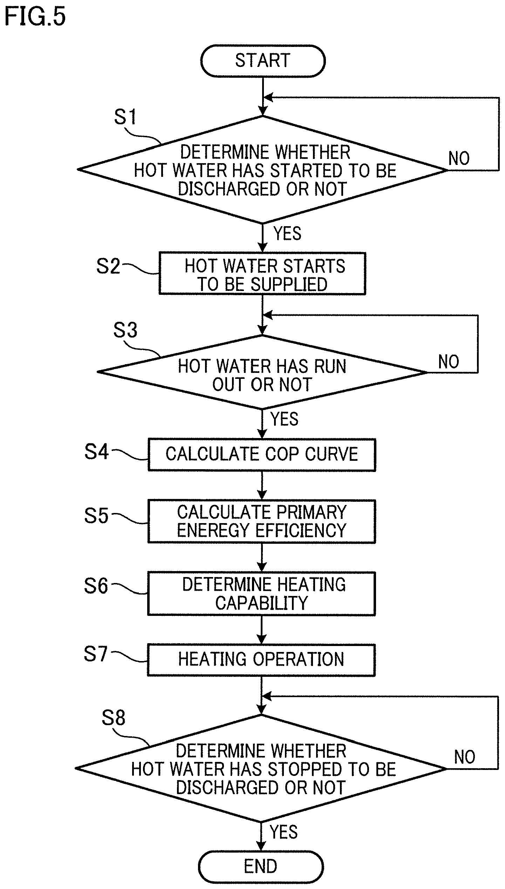

The following describes operation of the hot water supply system of the present embodiment based on FIG. 5.

In step S1, it is determined whether hot water has started to be discharged from the hot water supply terminal 10 or not. In step S1, when it is determined that the hot water has started to be discharged from the hot water supply terminal 10, the process proceeds to step S2 and hot water starts to be supplied from the hot water supply tank 5. In step S3, it is determined whether the amount of the hot water stored in the hot water supply tank 5 is decreased and the hot water in the hot water supply tank 5 has run out or not. In step S3, when it is determined that the stored hot water has run out, the process proceeds to step S4 and a COP curve is calculated based on the outside temperature and the supply water target temperature at the time. Thereafter, in step S5, primary energy efficiency of the heat pump unit 2 is calculated based on the COP curve.

Here, when hot water in the hot water tank has run out while the hot water is discharged from the hot water supply terminal 10, the auxiliary heating operation in which the heat pump unit 2 and the gas water heater 6 are driven at the same time is performed. Therefore, in step S6, not only the heating capability of the heat pump unit 2 but also the heating capability of the gas water heater 6 are determined. In step S7, the heating operation is performed in such a way that the frequency of the compressor 11 is controlled based on the heating capability of the heat pump unit 2 determined in the above manner, and the heating unit 6a of the gas water heater 6 is controlled based on the heating capability of the gas water heater 6 determined by the capability determination unit 35. Thereafter, in step S8, it is determined whether the hot water from the hot water supply terminal 10 has stopped to be discharged or not. In step S8, when it is determined that the hot water from the hot water supply terminal 10 has stopped to be discharged, the hot water from the hot water supply tank 5 stops to be supplied.

### <Characteristics of Hot Water Supply System of Present Embodiment>

In the hot water supply system of the present embodiment, when heating operation, in which the heat pump unit 2 and the gas water heater 6 are driven at the same time, is performed in the case of running out of hot water in the hot water tank, the system is driven with the lower heat pump efficiency of the heat pump unit 2 and the higher frequency of the compressor, with the result that the heating capability as the heat pump unit 2 is increased. Therefore, heating ratio of the heat pump unit 2 in the whole hot water supply system is increased and overall energy efficiency of the hot water supply system 1 including the heat pump unit 2 and the gas water heater 6 is optimized.

In the hot water supply system of the present embodiment, the auxiliary heating operation is performed when the amount of the hot water stored in the hot water tank 5 is smaller than a predetermined amount as a result of discharge of the hot water from the hot water supply terminal 10. Therefore, even if the amount of the hot water stored in the hot water tank 5 becomes little, the hot water from the hot water supply terminal 10 can be discharged continuously.

In the hot water supply system of the present embodiment, when the auxiliary heating operation in which the heat pump unit 2 and the gas water heater 6 are driven at the same time is performed, heating capability of the heat pump type heating unit in the auxiliary heating operation is determined such that the heating capability of the heat pump type heating unit is higher than heating capability of the heat pump type heating unit at which the COP is the maximum, and the primary energy efficiency of the heat pump unit 2 is equal to or higher than the primary energy efficiency of the gas water heater 6. This arrangement prevents the primary energy efficiency of the heat pump unit 2 from being lower than the primary energy efficiency of the gas water heater 6, with the result that the reduction in energy efficiency of the whole hot water supply system can be prevented.

Thus, embodiments of the present invention have been described hereinabove, with reference to drawings. However, the specific structure of the present invention shall not be interpreted as to be limited to the above described embodiment. The scope of the present invention is defined not by the above embodiments but by claims set forth below, and shall encompass the equivalents in the meaning of the claims and every modification within the scope of the claims.

In the above described embodiment, the heating capability of the heat pump unit 2 is determined such that the heating capability is equal to the heating capability (a2) (frequency of the compressor corresponding to this) in the auxiliary heating operation and the primary energy efficiency is equal to the primary energy efficiency d of the gas water heater 6. However, the present disclosure is not limited to this. The advantageous effects of the present invention can be obtained when the heating capability of the heat pump unit 2 in the auxiliary heating operation (frequency of the compressor corresponding to this) is higher than the heating capability (a1) in the heat pump single operation (frequency of the compressor corresponding to this) , and the heat pump efficiency of the heat pump unit 2 in the auxiliary heating operation is lower than the heat pump efficiency of the heat pump unit 2 in the heat pump single operation, when outside temperature in the auxiliary heating operation is the same as outside temperature in the heat pump single operation.

In the above described embodiment, when the amount of the hot water stored in the hot water tank 5 is lower than a predetermined amount while the hot water is discharged from the hot water supply terminal 10, it is determined that the hot water has run out and the auxiliary heating operation in which the heat pump unit 2 and the gas water heater 6 are driven at the same time is performed. However, even if the hot water in the hot water tank has run out because of the other causes, the auxiliary heating operation in which the heat pump unit 2 and the gas water heater 6 are driven at the same time may be performed.

In the above described embodiments, it is described that the hot water supply system includes the gas water heater 6 as an auxiliary heating unit. However, the auxiliary heating unit is not limited to a gas water heater. Accordingly, the hot water supply system may include other heating means such as an electrical heater as the auxiliary heating unit.

### [Industrial Applicability]

With the present invention, when the heat pump type heating unit and the auxiliary heating unit is driven at the same time and the heating operation is performed, by increasing the heating ratio of the heat pump type heating unit, the energy efficiency can be improved.

### [Reference Signs List]

2 heat pump unit (heat pump type heating unit)
5 hot water tank
   6 gas water heater (auxiliary heating unit)

## Claims

1. A hot water supply system comprising:
a hot water tank (5) configured to store hot water;
a heat pump type heating unit (2) configured to be able to supply the hot water to the hot water tank (5); and
an auxiliary heating unit (6) configured to be able to heat the hot water supplied from the hot water tank (5) to a hot water supply terminal (10), **characterized in that**
the hot water supply system is configured to perform:
a heat pump single operation in which the heat pump type heating unit (2) is driven but the auxiliary heating unit (6) is not driven; and
an auxiliary heating operation in which the heat pump type heating unit (2) and the auxiliary heating unit (6) are driven at the same time, and
a controlling unit (30) configured to perform the following steps:
when outside temperature in the auxiliary heating operation is the same as outside temperature in the heat pump single operation, a frequency of a compressor (11) of the heat pump type heating unit (2) in the auxiliary heating operation is higher than a frequency of the compressor (11) of the heat pump type heating unit (2) in the heat pump single operation, and heat pump efficiency of the heat pump type heating unit (2) in the auxiliary heating operation is lower than heat pump efficiency of the heat pump type heating unit (2) in the heat pump single operation.

2. The hot water supply system according to claim 1, wherein, the auxiliary heating operation is performed when an amount of the hot water stored in the hot water tank (5) is smaller than a predetermined amount while the hot water is discharged from the hot water supply terminal (10).

3. The hot water supply system according to claim 1 or 2, wherein, heating capability of the heat pump type heating unit (2) in the auxiliary heating operation is determined such that the heating capability of the heat pump type heating unit (2) is higher than heating capability of the heat pump type heating unit at which COP is maximized at outside temperature when the auxiliary heating operation is performed and primary energy efficiency of the heat pump type heating unit (2) is equal to or higher than primary energy efficiency of the auxiliary heating unit (6).

## Patentansprüche

1. Heißwasserversorgungssystem, umfassend:
einen Heißwassertank (5), der konfiguriert ist, um Heißwasser zu speichern;
eine Heizeinheit vom Wärmepumpentyp (2), die konfiguriert ist, um imstande zu sein, dem Heißwassertank (5) das Heißwasser zuzuführen; und
eine Hilfsheizeinheit (6), die konfiguriert ist, um imstande zu sein, das vom Heißwassertank (5) einem Heißwasserversorgungsanschluss (10) zugeführte Heißwasser zu heizen, **dadurch gekennzeichnet, dass**
das Heißwasserversorgungssystem konfiguriert ist, um Folgendes durchzuführen:
einen Wärmepumpeneinzelbetrieb, bei dem die Heizeinheit vom Wärmepumpentyp (2) angetrieben wird, aber die Hilfsheizeinheit (6) nicht angetrieben wird; und
einen Hilfsheizbetrieb, bei dem die Heizeinheit vom Wärmepumpentyp (2) und die Hilfsheizeinheit (6) gleichzeitig angetrieben werden, und
eine Steuereinheit (30), die konfiguriert ist, um die folgenden Schritte durchzuführen:
wenn eine Außentemperatur im Hilfsheizbetrieb die gleiche ist wie eine Außentemperatur im Wärmepumpeneinzelbetrieb, eine Frequenz eines Kompressors (11) der Heizeinheit vom Wärmepumpentyp (2) im Hilfsheizbetrieb höher ist als eine Frequenz des Kompressors (11) der Heizeinheit vom Wärmepumpentyp (2) im Wärmepumpeneinzelbetrieb, und Wärmepumpeneffizienz der Heizeinheit vom Wärmepumpentyp (2) im Hilfsheizbetrieb geringer ist als Wärmepumpeneffizienz der Heizeinheit vom Wärmepumpentyp (2) im Wärmepumpeneinzelbetrieb.

2. Heißwasserversorgungssystem nach Anspruch 1, wobei der Hilfsheizbetrieb durchgeführt wird, wenn eine Menge des im Heißwassertank (5) gespeicherten Heißwassers kleiner ist als eine vorbestimmte Menge, während das Heißwasser aus dem Heißwasserversorgungsanschluss (10) abgelassen wird.

3. Heißwasserversorgungssystem nach Anspruch 1 oder 2, wobei Heizfähigkeit der Heizeinheit vom Wärmepumpentyp (2) im Hilfsheizbetrieb derart bestimmt wird, dass die Heizfähigkeit der Heizeinheit vom Wärmepumpentyp (2) höher ist als Heizfähigkeit der Heizeinheit vom Wärmepumpentyp, bei der COP bei Außentemperatur maximiert wird, wenn der Hilfsheizbetrieb durchgeführt wird, und primäre Energieeffizienz der Heizeinheit vom Wärmepumpentyp (2) gleich oder höher ist als primäre Energieeffizienz der Hilfsheizeinheit (6).

## Revendications

1. Système d'alimentation en eau chaude comprenant :
un réservoir d'eau chaude (5) configuré pour stocker de l'eau chaude ;
une unité de chauffage de type pompe à chaleur (2) configurée pour pouvoir fournir de l'eau chaude au réservoir d'eau chaude (5) ; et
une unité de chauffage auxiliaire (6) configurée pour pouvoir chauffer l'eau chaude fournie depuis le réservoir d'eau chaude (5) à un terminal d'alimentation en eau chaude (10), **caractérisé en ce que**
le système d'alimentation en eau chaude est configuré pour réaliser :
une opération unique de pompe à chaleur dans laquelle l'unité de chauffage de type pompe à chaleur (2) est entraînée mais l'unité de chauffage auxiliaire (6) n'est pas entraînée ; et
une opération de chauffage auxiliaire dans laquelle l'unité de chauffage de type pompe à chaleur (2) et l'unité de chauffage auxiliaire (6) sont entraînées en même temps, et
une unité de commande (30) configurée pour réaliser les étapes suivantes :
lorsqu'une température extérieure dans l'opération de chauffage auxiliaire est la même qu'une température extérieure dans l'opération unique de pompe à chaleur, une fréquence d'un compresseur (11) de l'unité de chauffage de type pompe à chaleur (2) dans l'opération de chauffage auxiliaire est supérieure à une fréquence du compresseur (11) de l'unité de chauffage de type pompe à chaleur (2) dans l'opération unique de pompe à chaleur, et un rendement de pompe à chaleur de l'unité de chauffage de type pompe à chaleur (2) dans l'opération de chauffage auxiliaire est inférieur à un rendement de pompe à chaleur de l'unité de chauffage de type pompe à chaleur (2) dans l'opération unique de pompe à chaleur.

2. Système d'alimentation en eau chaude selon la revendication 1, dans lequel l'opération de chauffage auxiliaire est réalisée lorsqu'une quantité de l'eau chaude stockée dans le réservoir d'eau chaude (5) est inférieure à une quantité prédéterminée pendant que l'eau chaude est évacuée du terminal d'alimentation en eau chaude (10).

3. Système d'alimentation en eau chaude selon la revendication 1 ou 2, dans lequel
une capacité de chauffage de l'unité de chauffage de type pompe à chaleur (2) dans l'opération de chauffage auxiliaire est déterminée de sorte que la capacité de chauffage de l'unité de chauffage de type pompe à chaleur (2) soit supérieure à une capacité de chauffage de l'unité de chauffage de type pompe à chaleur à laquelle un coefficient de performance, COP, est maximisé à une température extérieure lorsque l'opération de chauffage auxiliaire est réalisée et un rendement énergétique primaire de l'unité de chauffage de type pompe à chaleur (2) est supérieur ou égal à un rendement énergétique primaire de l'unité de chauffage auxiliaire (6).
